Europäisches Patentamt

European Patent Office

Office européen des brevets

(19)

(11) Publication number: **0 124 656**
**A1**

(12) # EUROPEAN PATENT APPLICATION

(21) Application number: **83200648.0**

(22) Date of filing: **04.05.83**

(51) Int. Cl.³: **C 08 L 25/02**
C 08 J 9/14, C 08 K 5/02
//(C08L25/02, 91/06)

(43) Date of publication of application:
**14.11.84 Bulletin 84/46**

(84) Designated Contracting States:
**AT BE CH DE FR GB IT LI NL SE**

(71) Applicant: **THE DOW CHEMICAL COMPANY**
**Dow Center 2030 Abbott Road Post Office Box 1967**
**Midland Michigan 48640(US)**

(72) Inventor: **Suh, Kyung Won**
**1533 Welsh Hills Road**
**Granville Ohio 43023(US)**

(74) Representative: **Urbanus, Henricus Maria, Ir. et al,**
**c/o Vereenigde Octrooibureaux Nieuwe Parklaan 107**
**NL-2587 BP 's-Gravenhage(NL)**

(54) **Styrenic polymer foams having improved flammability characteristics and method for preparing same.**

(57) Extruded styrenic polymer foams having improved flammability characteristics are obtained by incorporating a small amount (e.g., from about 0.03 to about 2 weight percent based on polymer) of a waxy material in conjunction with at least one conventional non-waxy halogenated flame retarding agent into the foam.

EP 0 124 656 A1

STYRENIC POLYMER FOAMS HAVING

IMPROVED FLAMMABILITY CHARACTERISTICS

AND METHOD FOR PREPARING SAME

This invention relates to styrenic polymer foams having improved flammability characteristics and to a method for preparing same.

Extruded foams of styrenic polymers are known and are highly desirable for many applications such as thermal insulation, packaging and the like. In such applications, it is generally desirable that the styrenic polymer foams exhibit the best practicable flammability characteristics (i.e., the lowest practicable propensity to ignite and/or to support combustion once ignited). A number of prior art approaches for improving the flammability characteristics of styrenic polymer foams have been suggested. One approach for improving flammability characteristics involves the incorporation of relatively large quantities of a halogen-containing compound into the foam as a flame retardant component. Alternatively, the incorporation of a combination of a relatively smaller amount of the halogen-containing compound with an organic peroxide compound or, in combination with iron naphthenate, a chlorine compound (e.g., chlorinated paraffin) in an amount sufficient to provide at least 2 percent by weight of chlorine content based upon the polymer composition have been proposed to improve flammability characteristics. (See, for example, U.S. Patent 3,595,815). Unfortunately, such prior art approaches toward improved flammability characteristics can introduce troublesome processing problems and/or detrimentally affect one or more other important styrenic polymer foam properties such as decreasing ultraviolet stability; decreasing polymer stability (and thus increasing degradation and decreasing foam strength); increasing brittleness; discoloring the foam; decreasing heat distortion temperature, etc.

In view of the foregoing, it would be highly desirable to provide a styrenic polymer foam having improved flammability characteristics and a method for preparing these foams while at the same time minimizing or at least significantly reducing the aforementioned attendant disadvantages of the various prior art approaches.

Accordingly, in one aspect, the present invention is a styrenic polymer foam having improved flammability characteristics. The styrenic polymer foam is characterized by the presence of at least one non-waxy flame retarding agent and from 0.03 to less than 2 weight percent of a waxy material having a melting point of less than 140°C, which waxy material, in the specific amount employed, imparts improved flammability characteristics to the styrenic polymer foam without significantly increasing the cell size of the foam during foam preparation.

In another aspect, the present invention is a method for preparing a styrenic polymer foam having improved flammability characteristics. The method is of the type wherein a heat-plastified styrenic polymer gel containing at least one volatile fluid foaming agent and at least one non-waxy flame retarding agent is expressed from a die into a region of reduced pressure, the expressed gel expands into cellular form and is cooled to a temperature at which the expanded cellular gel is self supporting. The method is characterized by the incorporation into the heat-plastified unfoamed gel of from 0.03 to less than 2 weight percent, based upon the styrenic polymer weight, of a waxy material which has a melting point below about 140°C and which imparts improved flammability characteristics to the resulting styrenic polymer foam without significantly increasing the cell size thereof.

As used herein, reference to "improving the flammability characteristics", "improved flammability characteristics", "flame retardant" and like phrases is meant to connote a measurably reduced propensity of a foam sample to ignite (or a reduced propensity of such foam sample to sustain combustion if ignited) when exposed to a small scale ignition source such as a Bunsen burner and, of course, such "reduced propensity" is propensity measured relative to that of a sample of foam comparable to that tested except for the absence therefrom of the aforementioned waxy material component of the present invention. Naturally, with regard to the foregoing "flammability" criterion, it must be recognized that all known synthetic hydrocarbon polymers will burn when subjected to a sufficiently intense source of heat. Accordingly, the small scale ignition tests employed herein may not reflect the properties of the polymer foams hereunder under actual fire conditions.

Styrenic polymers suitable for use in the practice of the present invention include styrene or substituted styrene homopolymers (e.g., polystyrene, poly(vinyl toluene), etc.); copolymers of styrene and a substituted styrene and copolymers of styrene or a substituted styrene with one or more comonomers polymerizable therewith (e.g., acrylonitrile, methyl methacrylate, acrylic acid etc.). Preferred styrenic polymers for use herein include polystyrene and copolymers of a major proportion (e.g., 75 weight percent or more) of styrene with a minor proportion (e.g., up to about 25 weight percent) of one or more other monomers polymerizable therewith.

Waxy materials suitable for use in the practice of the present invention include both natural and synthetic waxes (including both the halogenated, e.g., chlorinated, and non-halogenated versions thereof) or mixtures thereof which improves the flowability of the styrenic polymer melt under combustion conditions. For this purpose, the wax employed can have a melting point above or below the foaming temperature of the styrenic polymer composition employed. However, inasmuch as the use of from about 0.01 to 5 weight parts (per 100 weight parts of polymer) of waxes melting below the foaming temperature for purposes of enlarging the cell size of the foam prepared from various polymeric materials is disclosed by K.W. Suh and C. Amos in U.S. Patent No. 4,229,396, the focus of the present invention is directed to those waxy materials or mixtures of waxy materials which impart improved flammability characteristics without significantly enlarging the cell size of the resultant styrenic polymer foams.

A limited number of waxy materials (specifically, several waxy halogenated compounds such as various chlorinated paraffins, e.g., Chlorowax 70S which melts at a temperature of about 75°C) which melt below the foaming temperature employed in the preparation of most styrenic polymer foams exhibit these properties. (In this regard, the waxy halogenated material is presumed to improve the flammability characteristics of the foam when the propensity of the foam to ignite is reduced more than that expected due to the mere increase in the halogen content of the foam composition by the addition of the waxy halogenated material.) More typically, the waxy materials or mixtures employed herein are those waxy materials which melt at or above the foaming temperature of the styrenic polymer composition employed. Accordingly, inasmuch as foamable styrenic polymer compositions are generally foamed in the range from 115°C to 125°C, the waxy materials envisioned for use in the present invention are those having a melting point of at least 115°C. Preferably such waxy materials have a melting point of from 115°C to 140°C. Representative of waxes having a melting point within this temperature range include Polywax 2000, Polywax 1000, Polywax E-2020, Estawax 20, Estawax 25, Cardipol O-10, Cardipol O-20, Cincinnati Millacron 240, Halscarbon Wax 12-00, Santowax P, Casawax C103, Casawax A93/G, Casawax A93/B, Halowax 1013, Petrolite C-403, Halowax 1014, Abril 10DS and mixtures of two or more waxes (which individual waxes may or may not melt within the specified temperature range) which wax mixture melts within the specified temperature range.

The aforementioned waxy materials or mixture of waxy materials are employed in the practice of the present invention in an amount of from 0.03 to less than 2 weight percent based upon the weight of the styrenic polymer; with the use of larger amounts thereof being generally undesirable due to attendant disadvantageous impact upon the heat distortion temperature of the resultant styrenic polymer foam. Preferably such waxy material is employed in an amount ranging from 0.05 to 2.0 weight percent based upon the weight of the styrenic polymer employed. An especially preferred range is from 0.1 to 1.5 with a most preferred range being from 0.1 to 1.0, weight percent based upon the weight of styrenic polymer employed.

The non-waxy flame retarding agents suitably employed in the present invention include non-waxy flame retarding agents conventionally employed in styrenic polymer foams such as the non-waxy halogenated flame retarding agents (e.g., monochloropentabromocyclohexane, tetra bromobutane, dibromoethylbenzene, dibromopropanol, hexachloro cyclopentadiene, hexabromocyclododecane and the like). Preferred flame retarding agents are hexabromcyclododecane and monochloropentabromocyclohexane. The flame retarding agent is employed in the normal amounts (e.g., from 0.5 to 10, preferably from 0.5 to 5, weight percent based upon the weight of the styrenic polymer employed). Naturally, since the indicated conventional flame retarding component employed herein is required to be a non-waxy substance, it will be readily recognized that halogenated waxes such as chlorinated paraffins are not the sort of materials to be employed as that particular component of the present invention. Accordingly, it will be similarly apparent that this non-waxy flame retarding component will always be different than the waxy component employed herein.

The styrenic polymer foams of the present invention can be prepared by an extrusion foaming process or by a suspension process for making expandable styrenic polymer beads. The advantages of the present invention are particularly evident, as compared to the use of peroxide materials to improve the flammability characteristics of the styrenic polymer foams in extrusion foaming processes. Specifically, the waxy materials described herein are suitably employed in extrusion foaming processes whereas most organic free radical initiators decompose under extrusion conditions employed in the preparation of many styrenic polymer foams and can not therefore be suitably employed in that process.

In the extrusion foaming process, a heat-plastified styrenic polymer gel containing a volatile fluid foaming agent, at least one flame retarding agent and from 0.03 to 2 weight percent (based on polymer weight) of the hereinabove described waxy material is expressed from a die into a region of reduced pressure such that the expressed gel expands into cellular form. The resulting expressed product is cooled to a temperature at which the expanded cellular gel is self-supporting. In the practice of the present invention, any volatile fluid blowing or expanding agents capable of forming the desired cellular foam can be employed as the volatile fluid foaming agent.

The individual ingredients comprising the foamable composition can be combined in any convenient fashion. For example, the waxy material, (optionally, as a mixture with the retarding agent or other adjuncts employed in the preparation of the foam and preferably in the form of a concentrate of the waxy material in a styrenic polymer) may be mixed with the heat-plastified gel or blended with the granular resinous styrenic polymer prior to being heat-plastified in the extruder. The waxy material may be added to the polymer before or after the addition of the volatile fluid foaming agent, either before or after the resinous material has been heat-plastified. Alternatively, in a process wherein the volatile fluid foaming agent is being added to a heat-plastified gel within an extruder, the waxy material can be conveniently admixed with the blowing agent and both components added to the extruder simultaneously.

The improved flammability characteristics of the styrenic polymer foams of the present invention are exhibited by the following example. The example is meant to illustrate, but not limit, the invention.

EXAMPLE

Various styrenic polymer foams (Sample Nos. 1-7) are prepared from mixtures consisting of polystyrene, barium stearate (about 0.075 weight percent based on the weight of the polystyrene polymer), magnesium oxide (about 0.015 to 0.03 weight percent based upon the weight of the polystyrene polymer), flame retarding agent (monochloropentabromocyclo hexane) and wax, in the form of a 5 percent polymer concentrate, as specified in the accompanying Tables I, II and III by feeding the mixture to an extruder and melting the mixture at a temperature of 200°C and a pressure of from 1500 to 2000 pounds per square inch. The blowing agent employed is a blend of equal weight parts of methyl chloride and dichlorodifluormethane. It is introduced into the polymer melt in the melting section of the extruder and the resulting mixture is thoroughly mixed and then cooled to the foaming temperature (115° to 125°C). The mixture is then extruded through a slit die at about 400 600 pounds per square inch and expanded between a pair of substantially parallel plates to form the foam into a rectangular cross-section. Styrenic polymer foams (Comparative Samples A-C) are prepared using identical techniques except that no waxy material was incorporated within the foamable mixtures.

The flammability characteristics of the resulting samples are evaluated by holding, at horizontal position, test pieces 1/4 inch thick, 1 inch wide and 6 inches long in the flame of a horizontally positioned micro-burner for 1.5 seconds, removing the burner and noting the time for the sample to extinguish. In such flammability testing, 6 test pieces are cut from each sample and average extinguishment times are reported in Table 1.

TABLE 1

| | Comparative Sample A | Sample No. 1 |
|---|---|---|
| Type | None | Petrolite C-400 Wax |
| Wax Amount (pph)[1] | 0 | 0.05 |
| Blowing Agent Amount (pph)[1] | 10.0 | 10.0 |
| Flame Retarding Agent Agent, Amount (pph)[1,3] | 3.0 | 3.0 |
| Foam Density (pcf)[2] | 1.99 | 1.96 |
| Cell Size (mm) | 0.49 | 0.45 |
| Heat Distortion Temp ($^\circ$F) | 180 | 180 |
| Compressive Strength (psi) | | |
| Vertical | 49.9 | 54.9 |
| Horizontal | 20.2 | 17.9 |
| Extrusion | 19.2 | 19.1 |
| Solution Viscosity (cp) | 11.2 | 11.2 |
| Extinguishment Time (sec.) | 8.0 | 6.8 |

1. pph    = parts by weight per 100 weight parts of polystyrene
2. pcf    = pounds per cubic foot
3. flame retarding agent = monochloropentabromocyclohexane

As evidenced by the data presented in the foregoing Table I, the incorporation of the waxy material into the styrenic polymer foam improves the flammability characteristics of the foam. It should be noted that when 0.1 weight percent of Petrolite C-400 wax are added to the styrenic polymer foam, the flammability characteristics of the foam are again improved. However, this amount of the C-400 wax increases the cell size of the resulting foam. Therefore, it is not an example of the present invention since the present invention contemplates using only waxes and amounts of said waxes sufficient to improve flammability characteristics without increasing cell size of the foam.

## TABLE II

| | Comparative Sample B | Sample No. 2 | Sample No. 3 |
|---|---|---|---|
| Wax Type | None | Polywax 2000 | Chlorowax 70S |
| Wax Amount (pph)[1] | 0 | 0.2 | 0.2 |
| Foam Density (pcf)[2] | 2.14 | 1.95 | 2.35 |
| Cell Size (mm) | 0.48 | 0.4 | 0.26 |
| Compressive Strength (psi) | | | |
| Vertical | 23.6 | -- | 53.9 |
| Horizontal | 33.1 | -- | 27.2 |
| Extrusion | 33.3 | -- | 41.0 |
| Melt Flow Rate (g/10 min) | | | |
| at 175$^\circ$C | 1.8 | -- | 2.0 |
| 200$^\circ$C | 4.7 | -- | 15.1 |
| 225$^\circ$C | 58.3 | -- | 104.6 |
| Extinguishment Time (sec.) | 4.4 | 3.0 | 3.3 |

1. Same as in Table I.
2. Same as in Table I.
3. Blowing agent is employed in an amount of from 11 to 12.5 pph and the flame retarding agent is employed at 1.45 pph.

The samples of Table III were additionally checked for flammability with a slightly different test method which generally corresponded to the test known as the French Flame Persistency Test (CSTB). Three bar-shaped test pieces were cut from each sample board tested. The three specimens measured about 8 to 10 inches in the direction horizontal to extrusion, 35 mm in the extruded direction and 30 mm in the direction vertical to extrusion. The flame of a propane/butane bunsen burner, leaning diagonally at a 45° angle toward the end of the horizontally positioned specimen, was held in contact with the end of the specimen for 5 seconds following the retreating end as it melted and burned away. After 5 seconds the flame was removed and the time required for the burning specimen to extinguish was then recorded. This procedure, termed an "attack" was repeated until the specimen was consumed, usually about 6 to 8 attacks. The average extinguishment time for all the attacks on all of the three specimens is shown for each sample in Table III, labeled CSTB Time. The results of this CSTB testing are summarized in Table III below.

TABLE III

| Wax Type | None | Chlorowax 70S | Chlorowax 70S | Chlorowax 70S |
|---|---|---|---|---|
| Wax Amount (pph)[1] | 0 | 0.5 | 1 | 2 |
| Flame Retarding Agent Amount[2] (% Bromine)[3] | 1.17 | 1.15 | 1.13 | 1.12 |
| (pph)[4] | 1.67 | 1.64 | 1.61 | 1.60 |
| Extinguishment Time (sec.) | 7.8 | 4.2 | 2.6 | 2.8 |
| CSTB Time (sec.) | 2.1 | 2.0 | 1.1 | 1.3 |

[1] pph = parts by weight per 100 weight parts of polystyrene.
[2] Flame retarding agent is monochloropentabromocyclohexane.
[3] % Bromine is measured by X-ray fluorescence.
[4] pph = parts halogenated flame retarding agent per 100 weight parts total polymer composition.
[5] The foam density is approximately 2 pounds per cubic foot, the blowing agent is employed in an amount of from 11 to 12 parts by weight per 100 weight parts polystyrene and the cell size is from about 3 to about 4 mm.

- C L A I M S -

1. A styrenic polymer foam having improved flammability characteristics, the foam comprising at least one non-waxy halogenated flame retarding agent and from 0.03 to less than 2 weight percent of a waxy material having a melting point of less than 140°C, which waxy material, in the specific amount employed, imparts improved flammability characteristics to the styrenic polymer foam without significantly increasing the cell size of the foam during foam preparation.

2. The styrenic polymer foam of Claim 1 wherein the non-waxy flame retarding agent is a non-waxy halogenated flame retarding agent, the waxy material is employed in an amount from 0.1 to 1.5 weight percent based on the weight of the styrenic polymer and is a halogenated paraffin.

3. The styrenic polymer foam of Claim 2 wherein the waxy material is a chloriniated paraffin.

4. The styrenic polymer foam of Claim 1 wherein the non-waxy flame retarding agent is a non-waxy halogenated flame retarding agent, the waxy material has a melting point which is equal to or greater than the foaming temperature employed in preparing the heat-plastified polymer gel.

5. The styrenic polymer foam of Claim 4 wherein the waxy material is employed in an amount of from 0.1 to 1.5 weight percent based upon the weight of the styrenic polymer.

6. The styrenic polymer foam of Claim 5 wherein the waxy material is employed in an amount of from 0.1 to 1.0 weight percent based upon the weight of the styrenic polymer, the halogenated flame retarding agent is monochloropentabromocyclohexane or hexabromocyclododecane.

7. The styrenic polymer foam of Claim 6 wherein the styrenic polymer is polystyrene.

8. A process for preparing an extruded styrenic polymer foam by expressing a heat-plastified styrenic polymer gel containing at least one volatile fluid foaming agent and at least one non-waxy flame retarding agent from a die into a region of reduced pressure, and expanding the expressed gel into cellular form and cooling to a temperature at which the expanded cellular gel is self supporting;

characterized by incorporating, into the heat-plastified unfoamed gel, from 0.03 to less than 2 weight percent, based upon the weight of the styrenic polymer, of a waxy material which has a melting point below about 140°C and which imparts improved flammability characteristics to the resulting styrenic polymer foam without significantly increasing the cell size thereof.

9. The process of Claim 1 wherein the non-waxy flame retarding agent is a non-waxy halogenated flame retarding agent, the waxy material is a chloronated paraffin which is employed in an amount from 0.1 to 1.5 weight percent based on the weight of the styrenic polymer.

10. The process of Claim 9 wherein the styrenic polymer is polystyrene and the halogenated flame retarding agent is monochloropentabromocyclohexane or hexabromocyclododecane.

11. The process of Claim 8 in which the waxy material has a melting point which is equal to or greater than the foaming temperature employed for the heat-plastified polymer gel and is employed in an amount of from 0.1 to 1.5 weight percent based upon the weight of the styrenic polymer.

12. The process of Claim 11 wherein the waxy material is employed in an amount of from 0.1 to 1.0 weight percent based upon the weight of the styrenic polymer and the halogenated flame retarding agent is monochloropentabromocyclohexane or hexabromocyclododecane and the styrenic polymer is polystyrene.

## DOCUMENTS CONSIDERED TO BE RELEVANT

| Category | Citation of document with indication, where appropriate, of relevant passages | Relevant to claim | CLASSIFICATION OF THE APPLICATION (Int Cl. 3) |
|---|---|---|---|
| X | WO-A-8 002 007  (DOW CHEMICAL)  * Claims 1-4; examples 1-3 * | 1,4-8, 11,12 | C 08 L  25/02<br>C 08 J   9/14<br>C 08 K   5/02 //<br>(C 08 L  25/02<br>C 08 L  91/06 ) |
| A | EP-A-0 027 556  (BASF)  * Claims 1,3,5,6; page 2, line 25 - page 3, line 25; examples 4-13 * | 1-3,6-10,12 | |
| E | US-A-4 386 165  (K.W. SUH)  * Whole document * | 1-12 | |

TECHNICAL FIELDS SEARCHED (Int. Cl. 3)

C 08 J

The present search report has been drawn up for all claims

| Place of search | Date of completion of the search | Examiner |
|---|---|---|
| THE HAGUE | 17-01-1984 | HALLEMEESCH A.D. |